# FASCICULE DE BREVET EUROPEEN

(11) **EP 2 324 205 B1**
(45) Date de publication et mention de la délivrance du brevet: **21.03.2012**
(21) Numéro de dépôt: 09804573.5
(22) Date de dépôt: 05.08.2009
(51) Int. Cl.: F01D 5/30, F04D 29/32

(54) **DISPOSITIF AMORTISSEUR DE VIBRATIONS POUR ATTACHES D'AUBES DE TURBOMACHINE, TURBOMACHINE ET MOTEURS ASSOCIES**
VIBRATIONSDÄMPFER FÜR TURBOMASCHINENSCHAUFELAUFSÄTZE, ZUGEHÖRIGE TURBOMASCHINE UND ZUGEHÖRIGE MOTOREN
VIBRATION DAMPER DEVICE FOR TURBOMACHINE BLADE ATTACHMENTS, ASSOCIATED TURBOMACHINE AND ASSOCIATED ENGINES

(30) Priorité: 06.08.2008 FR 0855448
(43) Date de publication de la demande: 25.05.2011
(73) Titulaire: Snecma, 75016 Paris (FR)
(72) Inventeur: FABRE, Adrien, Jacques, Philippe, 92120 Montrouge (FR)
(74) Mandataire: Gevers France
(86) Numéro de dépôt international: PCT/EP2009/060165
(87) Numéro de publication internationale: WO 2010/015660

(56) Documents cités:
- US-A- 5 240 375
- US-A- 6 102 664
- US-A1- 2002 044 870

## Description

La présente invention concerne le domaine des turbomachines et, en particulier celui des moteurs à turbine à gaz, tels que les turboréacteurs, les turbopropulseurs ou les moteurs à hélices rapides (connus aussi sous le nom de «propfans »). Il vise un dispositif d'amortisseur des vibrations pour les attaches des aubes de ces moteurs.

Les turbomachines aéronautiques sont composées d'une pluralité de roues aubagées, c'est-à-dire de disques rotatifs à la périphérie desquels sont fixées des aubes mobiles. Ces roues aubagées sont des pièces particulièrement sensibles car elles doivent répondre en termes de dimensionnement à des impératifs de tenue mécanique à la rotation et au chargement aérodynamique. L'ensemble de ces aspects fait que ces structures sont chargées statiquement et que, compte tenu des impératifs de durée de vie, les amplitudes de vibrations qu'elles subissent doivent rester faibles.

La conception et la mise au point d'une turbomachine impliquant la coordination de plusieurs disciplines, le processus de dimensionnement est itératif. Le dimensionnement vibratoire est effectué afin d'éviter la présence de modes critiques dans la plage de fonctionnement. L'ensemble est validé à la fin du cycle de conception par un essai moteur sur lequel les amplitudes vibratoires sont mesurées. Il apparaît parfois de forts niveaux induits soit par des réponses forcées, synchrones ou asynchrones, soit par des instabilités. La conception doit alors être revue, ce qui est particulièrement long et couteux.

L'objectif sur le plan industriel est donc de prédire au plus tôt, dans le cycle de dimensionnement, les niveaux de réponse vibratoires des structures afin de prendre les mesures correctives qui s'imposent le plus en amont dans la conception. Parmi ces axes, l'amortissement mécanique est un enjeu important pour les concepteurs.

L'amortissement des pales des compresseurs est un problème particulier qu'il convient de traiter avec soin, celles-ci étant particulièrement sensibles aux phénomènes vibratoires, et ce d'autant plus que leur longueur est importante. Ce problème est donc particulièrement aigu avec les pales du premier étage du compresseur basse pression, que celui-ci soit un étage de turbopropulseur dont la roue aubagée n'est pas carénée, un étage de turboréacteur double flux dont la roue ou « soufflante » est carénée, ou encore une roue non carénée d'un moteur à hélice rapide.

Il est en outre particulièrement délicat dans le cas des moteurs à hélices rapides car, d'une part, celles-ci sont deux fois plus élancées que les pales actuelles d'une soufflante donc plus sensibles aux phénomènes de flottement et, d'autre part, le fait d'avoir deux rangs d'hélices contrarotatives produit, du fait de l'effet de sillage de la première hélice sur la seconde, des sollicitations en excitation forcée importantes. On peut rencontrer également un couplage entre des modes de vibrations des deux rangs d'hélices contrarotatives au travers de la structure qui les supporte et qui peut être destructeur pour le moteur. De plus les hélices rapides, à la différence des hélices carénées, sont sensibles aux charges dites 1P qui se créent lors de la mise en incidence du moteur, notamment lors de la mise en rotation de l'avion au décollage. Lors de ces phases la pale d'une hélice rapide ne voit pas la même incidence du flux d'air selon sa position angulaire et elle est donc soumise à une excitation spécifique, synchrone avec le régime du moteur.

La fixation des pales sur le disque du compresseur est classiquement assurée par des ensembles du type attache brochée, c'est-à-dire par des alvéoles ouverts dans lesquels sont glissés des bulbes constituant les pieds des pales. Ces alvéoles sont découpés dans le disque et présentent des parois de rétention sur lesquelles s'appuient les faces correspondantes du pied de la pale.

Des dispositifs de réduction des vibrations des pales ont été imaginés comme, par exemple, celui décrit dans le brevet US6102664 de la NASA, qui consiste à coller un matériau viscoélastique sur les faces du pied de pale qui sont en contact avec les parois de rétention des alvéoles du disque. Cette technique a pour inconvénient de nécessiter une modification du procédé de fabrication des pales de soufflantes ou d'hélices rapides et de ne pas être adaptée à un montage en rattrapage sur des pales existantes. Elle comporte aussi l'inconvénient de devoir changer la pale entièrement en cas de détérioration du dispositif amortisseur, au contraire d'une configuration ou le dispositif amortisseur est distinct de la pale comme proposé ici.

Une autre technique de l'art antérieur consiste à introduire une cale entre la surface de l'alvéole et celle du bulbe de pied de pale. Une telle cale, décrite dans le brevet US 5240375 de la société General Electric Company, se présente sous la forme de plusieurs couches métalliques assemblées en sandwich, avec une couche en acier austénitique enserrée entre deux couches de bronze phosphoreux à faible coefficient de frottement. Elle vise cependant à éviter l'usure des pièces en contact et n'a d'impact notable sur la résistance des pales aux sollicitations vibratoires.

Dans la demande de brevet EP 2014873 de la demanderesse, il est décrit une cale avec des couches rigides qui alternent avec des couches en matériau élastique.

La présente invention a objet l'amélioration de l'amortissement vibratoire des aubes de moteurs d'avions qui sont maintenues sur leur disque au moyen d'attaches brochées.

A cet effet l'invention a pour objet un dispositif d'amortissement vibratoire pour une aube de turbomachine munie d'une pale et d'un pied de pale apte à s'insérer dans un alvéole d'un disque porteur d'une roue aubagée, ledit dispositif étant apte à être positionné entre ledit pied de pale et une paroi de rétention dudit alvéole, au niveau du contact réalisé en fonctionnement entre le pied de pale et l'alvéole, ledit dispositif comprenant au moins une cale constituée par un assemblage de couches en matériaux rigides et en matériaux viscoélastiques, au moins une couche en matériau viscoélastique étant positionnée entre deux couches en matériaux rigides, la cale comportant deux parties, chacune formant une branche latérale apte à être insérée le long d'une des deux parois de rétention, les deux branches latérales étant reliées l'une à l'autre, de façon à constituer une pièce unique, par une troisième partie formant fond de cale en matériau rigide, caractérisé en ce que ledit fond de cale est positionné, relativement aux branches latérales, de façon à se retrouver après montage en extrémité amont ou aval du pied de pale.

L'introduction d'une cale stratifiée comprenant au moins une couche en matériau viscoélastique et deux couches en matériaux rigides, permet, par la dissipation d'énergie qu'elle génère, d'augmenter l'amortissement des vibrations des pales. Ceci permet de décaler les modes de vibration des pales vers les plus basses fréquences et ainsi de les renvoyer en dessous du régime de ralenti du moteur. Le positionnement de la partie formant fond de cale, à l'amont ou à l'aval du pied de pale permet de garantir que les branches latérales se positionnent de façon optimale au contact des parois de rétention, sans une interférence qui pourrait être créée par un contact entre le fond de cale et le fond de l'alvéole ou bien le pied de pale. On s'assure ainsi que les déplacement relatifs des couches constituant les parois latérales ne seront pas perturbés et qu'ainsi ces parois assureront pleinement leur fonction d'amortissement.

Selon des modes de réalisation préférentiels :
- la cale est constituée par l'assemblage d'un nombre impair de couches supérieur à 3, les couches en matériaux viscoélastiques succédant alternativement aux couches en matériaux rigides et les couches externes étant réalisées en matériaux rigides.
- les caractéristiques du matériau viscoélastique varient d'une couche à l'autre.
- les caractéristiques du matériau rigide varient d'une couche à l'autre.
- le fond de la cale forme une seule pièce avec une des couches en matériaux rigides des branches latérales.
- la cale est obtenue à partir d'une pièce plane constituée de trois segments consécutifs, séparés l'un de l'autre par des lignes de pliage, le segment formant fond de cale étant positionné entre les deux segments formant les branches latérales.

L'invention a également pour objet une turbomachine comprenant au moins un disque porteur d'une roue aubagée, dont les aubes sont insérées dans les alvéoles du disque moyennant l'introduction d'un dispositif d'amortissement vibratoire décrit ci-dessus.

Selon des modes préférentiels :
- le disque de l'étage de soufflante d'un moteur à turbine à gaz doté d'une soufflante est équipé d'un dispositif d'amortissement vibratoire décrit ci-dessus.
- le disque d'au moins un des étages porteurs d'hélices non carénées d'un moteur à hélices rapides est équipé d'un dispositif d'amortissement vibratoire décrit ci-dessus.

D'autres caractéristiques et avantages ressortiront de la description qui suit de divers modes de réalisation de l'invention, en référence aux dessins annexés.

Sur ces dessins,
- la figure 1 est une vue en coupe d'un disque de compresseur utilisant la technologie des attaches brochées,
- la figure 2 est une vue en perspective d'un alvéole dans le cas d'une pale d'hélice à pas variable,
- la figure 3 est une vue en coupe du dispositif de maintien d'une aube par un alvéole d'un disque, selon l'art antérieur,
- la figure 4 est une vue en coupe des matériaux constitutifs d'une cale selon un mode de réalisation de l'invention, soumis à une contrainte de compression,
- la figure 5 est une vue en coupe des matériaux constitutifs d'une cale selon un mode de réalisation de l'invention, soumis à une contrainte de cisaillement,
- la figure 6 est une vue en plan d'une cale selon un mode de réalisation de l'invention, avant sa mise en forme par pliage,
- les figures 7 et 8 sont respectivement une vue de face et une vue en coupe de dessus d'une cale selon un mode de réalisation de l'invention, après sa mise en forme par pliage,
- la figure 9 est une vue en coupe du dispositif de maintien d'une aube par l'alvéole d'un disque, avec une cale selon un mode de réalisation de l'invention interposée entre l'alvéole et le pied de la pale, et
- la figure 10 est une vue en coupe d'une pale et de son pied en position dans l'alvéole d'un disque, avec une cale selon un mode de réalisation de l'invention, montrant la transmission des efforts et le sens des déplacements associés.

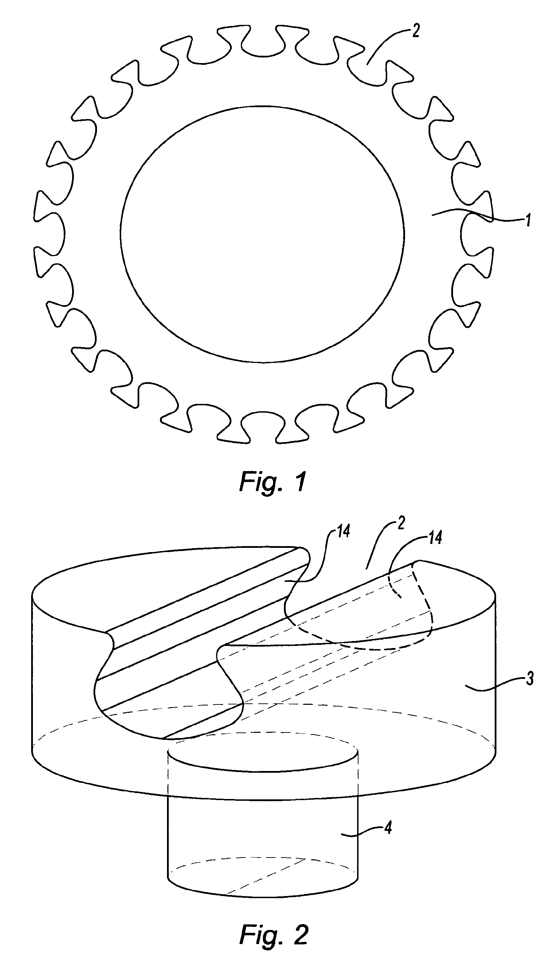

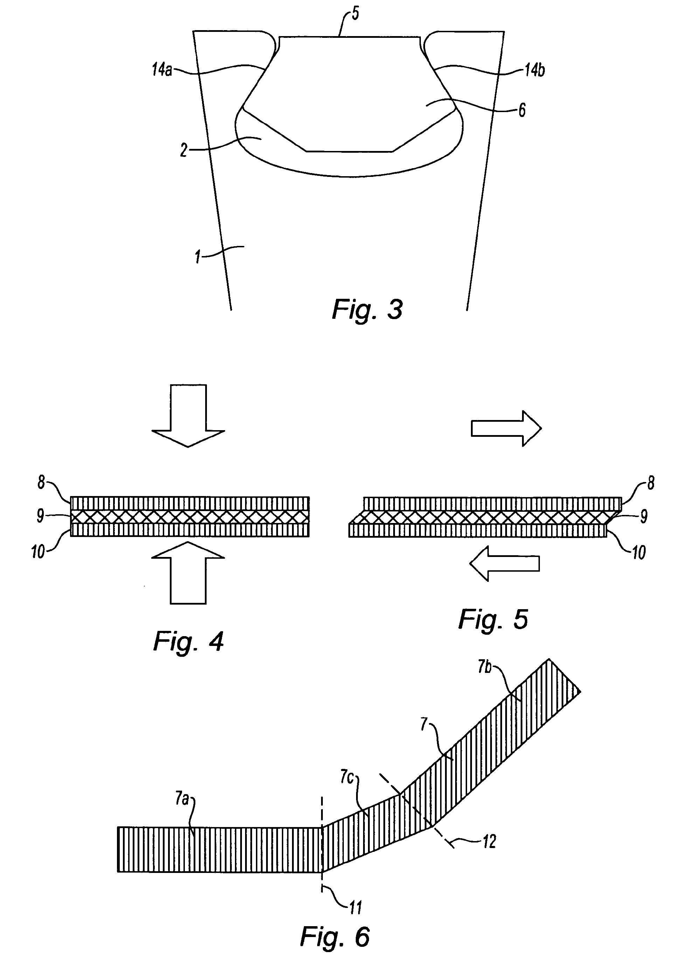

En se référant à la figure 1 on voit un disque de compresseur 1 pour une turbomachine, dont la périphérie est découpée par des alvéoles 2 répartis régulièrement sur toute la circonférence. La figure 2 montre une attache brochée pour un moteur à pas variable ; l'alvéole 2 est découpé dans une pièce cylindrique 3 qui se termine à son extrémité inférieure par un pivot 4 tenu par le disque 1 et monté libre en rotation. L'alvéole 2 est ouvert radialement vers l'extérieur pour laisser passer la pale et présente deux parois 14 de rétention destinées à retenir la pale lorsque le moteur est en fonctionnement. La figure 3 montre le pied 6 d'une pale 5, en forme de bulbe ou de queue d'aronde, qui est inséré dans un alvéole 2 d'un segment du disque 1.

En se référant maintenant à la figure 4 on voit un matériau stratifié destiné à constituer une cale 7 apte à être insérée entre le pied 6 d'une pale 5 de compresseur et les parois de rétention 14a et 14b de l'alvéole 2 du disque 1 correspondant. Dans l'exemple représenté le matériau stratifié est composé de trois couches empilées, fixées les unes sur les autres, qui sont réalisées, pour les deux couches extérieures 8 et 10 en des matériaux rigides, comme par exemple des matériaux métalliques, et pour la couche intermédiaire 9 en un matériau viscoélastique.

La viscoélasticité est la propriété d'un solide ou d'un liquide qui, lorsqu'il est déformé, montre un comportement à la fois visqueux et élastique par une dissipation et un stockage simultanés d'énergie mécanique.

Les caractéristiques, isotropes ou anisotropes, d'élasticité du matériau rigide sont choisies supérieures à celles, isotropes ou anisotropes, du matériau viscoélastique dans la plage de fonctionnement thermique et fréquentielle souhaitée du moteur. A titre d'exemple non limitatif, le matériau de la couche rigide peut être de type métallique ou composite, et le matériau de la couche viscoélastique de type élastomère, caoutchouc, silicone, polymère, verre ou résine époxy.

Le nombre de trois couches est purement indicatif, ce nombre pouvant être supérieur, pour autant qu'il y ait une succession de couches rigides et de couches viscoélastiques et que les couches externes soient en matériaux rigides. Le nombre de couches est défini en fonction, d'une part de l'espace disponible et, d'autre part de la rigidité et de la viscosité qu'il convient de donner à la cale 7 pour atteindre l'amortissement recherché. Selon les applications les couches de matériaux viscoélastiques et les couches de matériaux rigides peuvent être d'égales dimensions ou de dimensions différentes. Lorsque la cale comporte plusieurs couches en matériaux viscoélastiques celles-ci peuvent toutes présenter les mêmes caractéristiques mécaniques ou bien présenter des caractéristiques différentes. De même les couches en matériaux rigides peuvent toutes présenter les mêmes caractéristiques mécaniques ou bien présenter des caractéristiques différentes.

Sur la figure 4 le matériau stratifié est soumis à une contrainte de compression, pour laquelle il n'y a pas de déformation notable. En revanche, sur la figure 5, le matériau stratifié est soumis à une contrainte de cisaillement et on voit un déplacement latéral, la couche 9 en matériau viscoélastique se déformant pour autoriser ce déplacement. La déformation associée permet de dissiper une partie de l'énergie transmise par le mouvement de la pale 5 et ainsi de modifier les modes vibratoires de celle-ci.

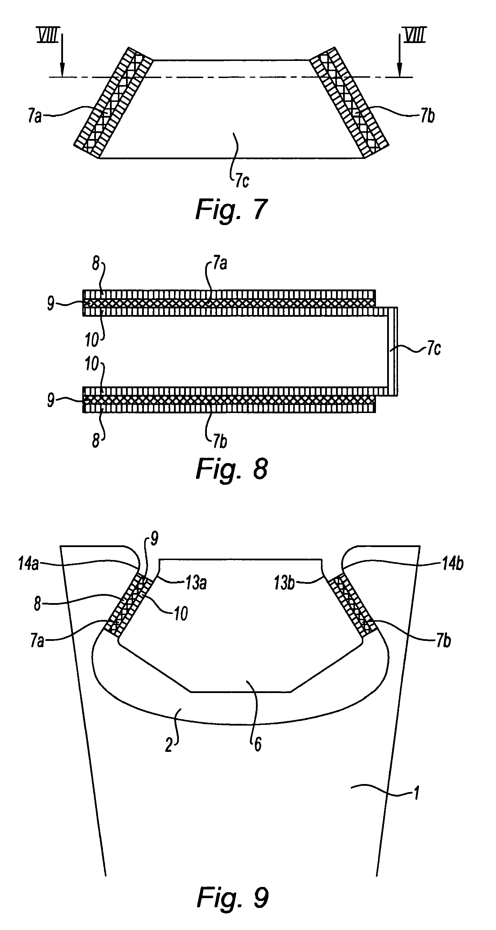

Sur la figure 6, on voit une des couches externes d'une cale selon l'invention, avant sa mise en forme, qui est constituée par un ruban formé de trois segments linéaires consécutifs, séparés les uns des autres par deux lignes de pliage 11 et 12. Les figures 7 et 8 montrent respectivement une vue de face et une vue de dessus, en coupe selon la direction VIII, d'une cale selon l'invention après son pliage le long des lignes de pliage 11 et 12. Dans le mode de réalisation représenté, seuls les deux segments extérieurs 7a et 7b de la cale présentent une structure stratifiée, le troisième segment 7c, situé entre les deux lignes de pliage 11 et 12, étant réalisé en une simple couche en matériau rigide, sans stratification. Pour des raisons de simplification de la réalisation le troisième segment 7c est réalisé dans la continuité de la couche externe 10 qui est destinée à être placée à l'intérieur du pliage. Dans un autre mode de réalisation, le troisième segment 7c peut être réalisé dans la continuité de la couche externe 8 qui est destinée à être placée à l'extérieur du pliage, ou dans la continuité d'une des couches intermédiaires en matériau rigide si le dispositif en comporte.

Dans cette configuration, la cale a, vue de dessus, une forme sensiblement en U, les deux branches latérales 7a et 7b du U étant cependant inclinées par rapport au plan de symétrie du U, par suite d'une rotation autour d'une droite parallèle à ce plan. La base du U, formant le fond de cale 7c, est perpendiculaire à ce plan et a pour objet de relier les deux branches latérales de la cale 7. Elle est destinée à se positionner contre la pale 5, à l'extrémité amont ou aval de son pied 6, en référence au sens de circulation du flux d'air dans le moteur.

Sur la figure 9 on voit deux parties d'une cale 7, en place dans un alvéole 2 d'un disque de compresseur 1. Les deux branches 7a et 7b sont interposées entre les parois supérieures 13a et 13b du pied 6 de la pale 5 et les parois de rétention 14a et 14b de l'alvéole 2. Du fait de la forme plane des couches de matériau viscoélastique et du fait qu'elles sont maintenues entre des couches planes de matériau rigide, celles-ci se déforment peu sous l'effet de la compression due à la transmission des efforts centrifuges de la pale aux parois de rétention 14a et 14b. En revanche, elles conservent leurs aptitudes à la déformation dans le plan des couches.

Lors de la mise en rotation des pales la cale 7 est, d'une part comprimée, du fait de l'effort centrifuge exercé sur le pied de pale 6 par la rotation du compresseur, et, d'autre part soumise à un cisaillement qui est fonction de l'angle que font les parois de rétention 14a et 14b avec la direction radiale passant par le centre de l'alvéole 2. Sous cette contrainte de cisaillement la couche viscoélastique 9 se déforme et les couches rigides 10 des deux branches 7a et 7b qui sont situées au contact du pied de pale 6, se déplacent radialement vers l'extérieur. Une fois que le régime du moteur atteint une valeur constante, et en absence de sollicitation vibratoire, la cale 7 reste stationnaire, dans cette position déformée.

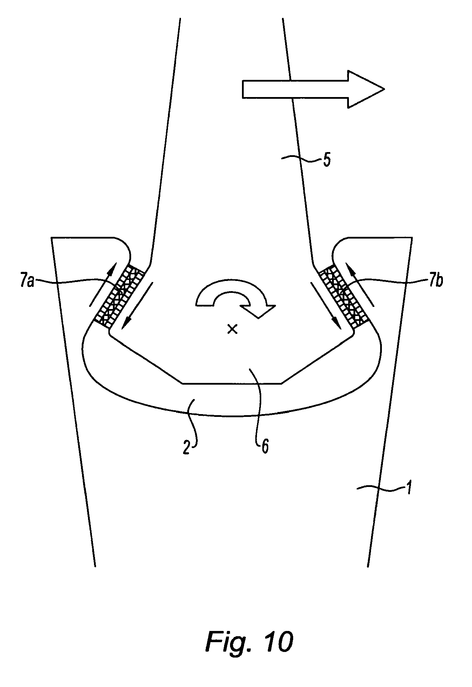

La figure 10 montre les efforts subis par la cale 7 lors d'une vibration en flexion de la pale 5, c'est-à-dire lors d'un déplacement de celle-ci le long de l'axe de rotation du moteur. Le pied 6 de la pale 5 est entraîné dans un mouvement de rotation autour d'un axe colinéaire avec l'axe central de l'alvéole 2 et des efforts de cisaillement complémentaires sont générés sur les branches latérales 7a et 7b de la cale 7. Dans le cas du sens de déplacement de la pale 5 représenté sur la figure 10 la branche droite 7b voit son cisaillement augmenter tandis que celui de la branche gauche 7a le voit diminuer. Puis la vibration en flexion tend à faire revenir la pale 5 dans le sens inverse ; la branche 7b voit alors son cisaillement diminuer et la branche 7a le voit augmenter. Le déplacement alternatif que cette flexion induit sur le matériau viscoélastique provoque une dissipation de l'énergie de vibration et génère l'amortissement recherché.

On note que le positionnement du fond de cale 7c évite que celui-ci n'interfère avec les déplacements des branches latérales 7a et 7b et que des tensions parasites apparaissent dans ces branches si le fond de cale venait à entrer en contact avec soit le pied 6 de l'aube ou le fond de l'alvéole 2.

## Revendications

1. Dispositif d'amortissement vibratoire pour une aube de turbomachine munie d'une pale (5) et d'un pied de pale (6) apte à s'insérer dans un alvéole (2) d'un disque (1) porteur d'une roue aubagée, ledit dispositif étant apte à être positionné entre ledit pied de pale et une paroi dudit alvéole de rétention dudit pied (14a, 14b) au niveau du contact réalisé en fonctionnement entre le pied de pale (6) et l'alvéole (2), ledit dispositif comprenant au moins une cale (7) constituée par un assemblage de couches en matériaux rigides (8, 10) et en matériaux viscoélastiques (9), au moins une couche (9) en matériau viscoélastique étant positionnée entre deux couches en matériaux rigides (8, 10), la cale (7) comportant deux parties, chacune formant une branche latérale (7a, 7b) apte à être insérée le long d'une des deux parois de rétention (14a, 14b), les deux branches latérales étant reliées l'une à l'autre, de façon à constituer une pièce unique, par une troisième partie formant fond de cale (7c) en matériau rigide, **caractérisé en ce que** ledit fond de cale est positionné, relativement aux branches latérales (7a, 7b), de façon à se retrouver après montage en extrémité amont ou aval du pied de pale (6).

2. Dispositif d'amortissement vibratoire selon la revendication 1 dans lequel la cale (7) est constituée par l'assemblage d'un nombre impair de couches supérieur à 3, les couches (9) en matériaux viscoélastiques succédant alternativement aux couches en matériaux rigides et dans lequel les couches externes (8, 10) sont réalisées en matériaux rigides.

3. Dispositif d'amortissement vibratoire selon la revendication 2 dans lequel les caractéristiques du matériau viscoélastique varient d'une couche à l'autre.

4. Dispositif d'amortissement vibratoire selon l'une des revendications 1 à 3 dans lequel les caractéristiques du matériau rigide varient d'une couche à l'autre.

5. Dispositif d'amortissement vibratoire selon l'une des revendications 1 à 4 dans lequel le fond (7c) de la cale forme une seule pièce avec une des couches en matériaux rigides (8, 10) des branches latérales (7a, 7b).

6. Dispositif d'amortissement vibratoire selon la revendication 5 dans lequel la cale (7) est obtenue à partir d'une pièce plane constituée de trois segments consécutifs, séparés l'un de l'autre par des lignes de pliage (11, 12), le segment formant fond de cale (7c) étant positionné entre les deux segments formant les branches latérales (7a, 7b).

7. Turbomachine comprenant au moins un disque (1) porteur d'une roue aubagée, dont les pieds (6) des pales sont insérés dans les alvéoles (2) du disque (1) moyennant l'introduction d'un dispositif d'amortissement vibratoire selon l'une des revendications précédentes.

8. Moteur à turbine à gaz doté d'une soufflante dont le disque (1) de l'étage de soufflante est équipé d'un dispositif selon l'une des revendications 1 à 6.

9. Moteur à hélices rapides dont le disque (1) d'au moins un des étages porteurs d'hélices non carénées est équipé d'un dispositif selon l'une des revendications 1 à 6.

## Claims

1. A vibration damping device for a turbomachine blade equipped with an airfoil (5) and with a blade root (6) able to be inserted in a cavity (2) in a disk (1) supporting a bladed rotor, said device being able to be positioned between said blade root and a wall (14a, 14b) of said root retaining cavity, at the region of contact that occurs in operation between the blade root (6) and the cavity (2), said device comprising at least one shim (7) consisting of assembly of layers of rigid materials (8, 10) and of viscoelastic materials (9), at least one layer (9) of viscoelastic material being positioned between two layers of rigid materials (8, 10), the shim (7) comprising two parts, each one forming a lateral branch (7a, 7b) that can be inserted along one of the two retaining walls (14a, 14b), the two lateral branches being joined together, in such a way as to form a single component, by a third part (7c) of rigid material that forms the shim bottom, **characterized in that** said shim bottom is positioned, relative to the lateral branches (7a, 7b), in such a way that after fitting it lies at the upstream or downstream end of the blade root (6).

2. The vibration damping device as claimed in claim 1, in which the shim (7) consists of an assembly of an odd number of layers greater than 3, the layers (9) of viscoelastic materials alternately succeeding the layers of rigid materials and in which the outermost layers (8, 10) are made of rigid materials.

3. The vibration damping device as claimed in claim 2, in which the characteristics of the viscoelastic material vary from one layer to another.

4. The vibration damping device as claimed in one of claims 1 to 3, in which the characteristics of the rigid material vary from one layer to another.

5. The vibration damping device as claimed in one of claims 1 to 4, in which the shim bottom (7c) forms a single piece with one of the layers of rigid materials (8, 10) of the lateral branches (7a, 7b).

6. The vibration damping device as claimed in claim 5, in which the shim (7) is obtained from a flat component consisting of three consecutive segments separated from one another by fold lines (11, 12), the segment that forms the shim bottom (7c) being positioned between the two segments that form the lateral branches (7a, 7b).

7. A turbomachine comprising at least one disk (1) supporting a bladed rotor, the blade roots (6) of which are inserted in the cavities (2) of the disk (1) through the insertion of a vibration damping device as claimed in one of the preceding claims.

8. A gas turbine engine provided with a fan the disk (1) of the fan stage of which is equipped with a device as claimed in one of claims 1 to 6.

9. A propfan engine of which the disk (1) of at least one of the stages that carries unducted fans is equipped with a device as claimed in one of claims 1 to 6.

## Patentansprüche

1. Schwingungsdämpfungsvorrichtung für eine Turbomaschinenschaufel, versehen mit einem Schaufelblatt (5) und einem Schaufelfuß (6), der dafür geeignet ist, in eine Wabe (2) einer Trägerscheibe (1) eines Schaufelrads einzutreten, wobei die Vorrichtung zwischen dem Schaufelfuß und einer Wand der Rückhaltewabe für den Fuß (14a, 14b) im Bereich des Kontakts, der im Betrieb zwischen dem Schaufelfuß (6) und der Wabe (2) hergestellt ist, positionierbar ist, wobei die Vorrichtung mindestens einen Keil (7) umfasst, der von einem Verbund von Schichten aus starren Materialien (8, 10) und aus viskoelastischen Materialien (9) gebildet ist, wobei mindestens eine Schicht (9) aus viskoelastischem Material zwischen zwei Schichten aus starren Materialien (8, 10) positioniert ist, wobei der Keil (7) zwei Teile aufweist, wobei jeder einen seitlichen Schenkel (7a, 7b) bildet, der dafür geeignet ist, entlang einer der beiden Rückhaltewände (14a, 14b) eingesteckt zu werden, wobei die beiden seitlichen Schenkel durch ein drittes Teil, das einen Keilboden (7c) aus starrem Material bildet, derart miteinander verbunden sind, dass sie ein einziges Teil bilden, **dadurch gekennzeichnet, dass** der Keilboden, relativ zu den seitlichen Schenkeln (7a, 7b), derart positioniert ist, dass er sich nach der Montage am vorderen oder hinteren Ende des Schaufelfußes (6) befindet.

2. Schwingungsdämpfungsvorrichtung nach Anspruch 1, wobei der Keil (7) von einem Verbund einer ungeraden Anzahl von Schichten, die größer als 3 ist, gebildet ist, wobei die Schichten (9) aus viskoelastischen Materialien abwechselnd den Schichten aus starren Materialien folgen und wobei die äußeren Schichten (8, 10) aus starren Materialien hergestellt sind.

3. Schwingungsdämpfungsvorrichtung nach Anspruch 2, wobei die Merkmale des viskoelastischen Materials von einer Schicht zur anderen variieren.

4. Schwingungsdämpfungsvorrichtung nach einem der Ansprüche 1 bis 3, wobei die Merkmale des starren Materials von einer Schicht zur anderen variieren.

5. Schwingungsdämpfungsvorrichtung nach einem der Ansprüche 1 bis 4, wobei der Boden (7c) des Keils mit einer der Schichten aus starren Materialien (8, 10) der seitlichen Schenkel (7a, 7b) ein einziges Teil bildet.

6. Schwingungsdämpfungsvorrichtung nach Anspruch 5, wobei der Keil (7) ausgehend von einem ebenen Teil erhalten ist, das von drei aufeinander folgenden Segmenten gebildet ist, die durch Biegelinien (11, 12) voneinander getrennt sind, wobei das Segment, das den Keilboden (7c) bildet, zwischen den zwei Segmenten, welche die seitlichen Schenkel (7a, 7b) bilden, angeordnet ist.

7. Turbomaschine umfassend mindestens eine Trägerscheibe (1) eines Schaufelrads, wobei die Füße (6) der Schaufelblätter in die Waben (2) der Scheibe (1) mittels der Einführung einer Schwingungsdämpfungsvorrichtung nach einem der vorhergehenden Ansprüche eingesteckt sind.

8. Gasturbinenmotor versehen mit einem Gebläse, wobei die Scheibe (1) der Gebläsestufe mit einer Vorrichtung nach einem der Ansprüche 1 bis 6 versehen ist.

9. Schnellpropellermotor, wobei die Scheibe (1) mindestens einer der Trägerstufen der nicht stromlinienförmigen Propeller mit einer Vorrichtung nach einem der Ansprüche 1 bis 6 versehen ist.
